# EUROPEAN PATENT APPLICATION

(11) **EP 0 637 125 A1**
(43) Date of publication of application: **01.02.1995**
(21) Application number: 93305881.0
(22) Date of filing: 26.07.1993
(51) Int. Cl.: H02P 7/34

(54) **DC compound motor driving auxiliary generator with its main motor as power supply for shunt field winding excitation**

(71) Applicant: Yang, Tai-Her, Si-Hu Town Dzan-Hwa (TW)
(72) Inventor: Yang, Tai-Her, Si-Hu Town Dzan-Hwa (TW)
(74) Representative: Arthur, Bryan Edward

(57) **Abstract**

The present invention relates to a DC compound motor driving auxiliary generator with its main motor as power supply for shunt field winding excitation. More specifically, the armature rotor of DC compound motor having series field winding and shunt field winding, by virtue of mechanical coupling, drives the auxiliary generator for power generation to excite the shunt field winding of the main motor without necessity of additional DC power supply for field winding excitation; the auxiliary generator including shunt field winding of the main motor can be adjusted with regard to exciting current or setting with the value of exciting current or the excitation being positively increased in response to the speed. While the polar relation of shunt field winding to series winding may include appearing assisted compound or differential compound; and related wiring connection may include long compound and short compound. In addition, it may provide electric energy for other loads simultaneously by means of mounting auxiliary battery or by virtue of aforesaid auxiliary generator.

## Description

### SUMMARY OF THE INVENTION

The present invention relates to a DC compound motor driving auxiliary generator with its main motor as power supply for shunt field winding excitation. More specifically, the armature rotor of DC compound motor having series field winding and shunt field winding, by virtue of mechanical coupling, drives the auxiliary generator for power generation to excite the shunt field winding of the main motor without necessity of additional DC power supply for field winding excitation; the auxiliary generator including shunt field winding of the main motor can be adjusted with regard to exciting current or setting with the value of exciting current or the excitation being positively increased in response to the speed. While the polar relation of shunt field winding to series winding may include appearing assisted compound or differential compound; and related wiring connection may include long compound and short compound. In addition, it may provide electric energy for other loads simultaneously by means of mounting auxiliary battery or by virtue of aforesaid auxiliary generator.

### BRIEF DESCRIPTION OF THE DRAWINGS

FIG. 1 is a diagram showing the assisted compound type circuit for DC compound motor driving the auxiliary generator with its main motor as power supply for shunt field winding of the present invention.

FIG. 2 is a diagram showing the differential compound type circuit for DC compound motor driving the auxiliary generator with its main motor as power supply for shunt field winding of the present invention.

FIG. 3 is a diagram showing the DC compound motor driving the auxiliary generator with its main motor as power supply for shunt field winding of the present invention having an assisted auxiliary exciting battery circuit.

### DETAILED DESCRIPTION OF THE INVENTION

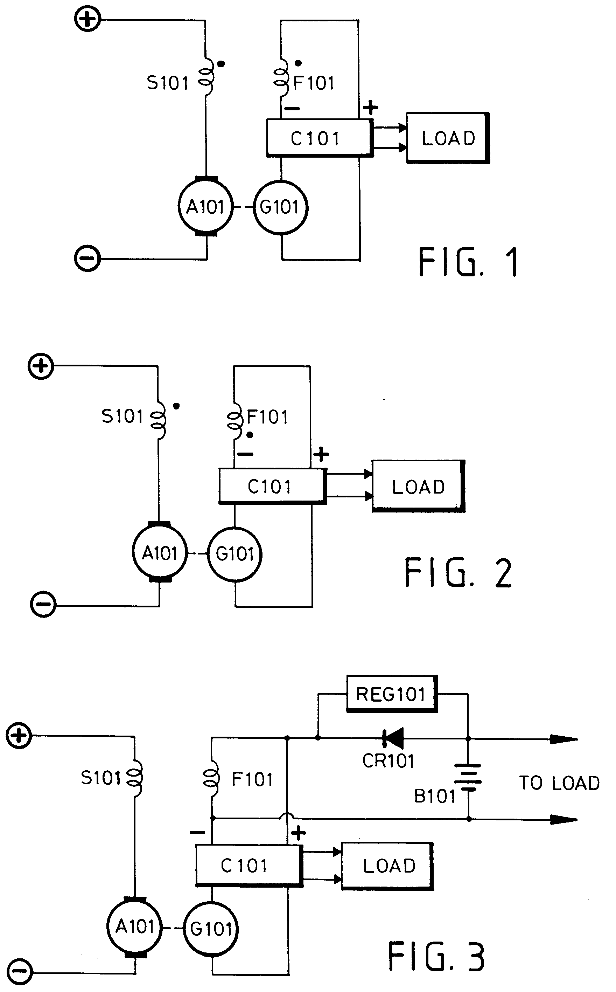

The shunt or compound motor of conventional DC motor, if it is desirous to employ field exciting current as speed control, usually requires a shunt field exciting power supply to match another power-driven winding consisted of series field winding and armature. It is applicable to the conversion of municipal AC power supply to DC power supply but it is not convenient for those portable power sources, such as a battery for series and parallel alternating its voltage for driving armature winding while shunt field excitation shall require another independent battery for power supply and excitation, which is not only costly but also difficult to take hold of synco power storage. The DC compound motor driving auxiliary generator with its main motor as power supply for shunt field winding excitation relates to the armature rotor of DC compound motor having series field winding and shunt field winding, by virtue of mechanical coupling, drives the auxiliary generator for power generation to excite the shunt field winding of the main motor without necessity of additional DC power supply for field winding excitation. As shown in FIGs. 1 and 2, it comprises:
The armature rotor A101 of DC main motor including internal rotation or external rotation type, consisted of a commutator, armature winding and shaft; the shaft is provided for mechanically rotary output and driving the coupling auxiliary exciting generator G101 for exciting the shunt field winding of the main motor;
the field of DC generator including series field winding S101 series with brush and armature and shunt field winding F101 being excited by auxiliary generator;
related mechanical structure such as the end casing, bearing, machine base, iron core, coupler, etc., to the above DC motor;
auxiliary generator G101 comprising AC or DC generator and coupling with the armature rotor of above DC main motor being driven by the auxiliary generator G101, and it is controlled through the control device C101; the auxiliary generator including an DC generator or AC generator through commutation to control the exciting current of shunt field winding to appear positive increment of excitation in response to the speed or adjustable and setting its exciting current while the polar relation of shunt field winding to series winding may include appearing assisted compound (as FIG. 1) or differential compound (as FIG. 2), and wiring connection may include long compound or short compound.

The above DC compound motor driving auxiliary generator with its main motor as power supply for the shunt field winding excitation may form the following different functions against DC motor subject to the variety of auxiliary generator and means of control:
(1) The auxiliary generator is changed to the type of constant current output when exceeding a defined RPM, such as saturated series generator or differential compound generator, which may appear constant current exciting against the shunt field winding when exceeding a defined speed, in order to appear assisted compound or differential compound excitation against the series winding, and the characteristics of constant current may come from the generator itself, such as the characteristics of differential compound series generator or the control by the control device; the auxiliary generator may comprise DC generator or AC generator through commutation.
(2) The characteristics as above (1) is further related to the control, adjustment and setting for the value of exciting constant current of shunt field.
(3) The exciting current produced from auxiliary generator being positively increased in response to the speed is provided for series winding to produce assisted compound or differential compound excitation.
(4) The characteristics as above (3) can be further provided for adjusting the amount of exciting current.

With the present design of DC motor driving auxiliary generator with its main motor as power supply for shunt field winding excitation, when driving power supply is variable voltage DC power supply or compound DC power supply the compound motor may obtain the operating characteristics of various types without necessity of adding independent exciting power supply, and if for operating motor by virtue of portable power source such as voltage alternating of power source with storage battery, another field exciting battery can be omitted to reduce the weight and cost.

In addition, for practical application, though the main motor can be started by means of series field winding with armature, as shown on FIG. 3 an auxiliary exciting battery B101 can be added to provide excitation against the shunt field F101 during the stage of start or the main motor running at low speed, and further a choke diode CR101 can be series between auxiliary battery B101 and shunt field winding F101 and parallel connected to voltage regulator REG101 to limit charging current flowing back to auxiliary battery B101 from auxiliary generator G101 as the adjustment through the voltage regulator REG101.

To conclude the above statement, the DC compound motor driving auxiliary generator with its main motor as power supply for shunt field excitation of the present invention can improve the defect that, the electric load of shunt or compound motor has to mount up additional field exciting battery to increase the cost and weight, and the difficult control of synco power consumption between armature and field. The present design is novel and please examine it in accordance with the laws.

## Claims

1. A DC compound motor driving auxiliary generator with its main motor as power supply for shunt field winding excitation relating to the armature rotor of DC compound motor having series field winding and shunt field winding, by virtue of mechanical coupling to drive the auxiliary generator for power generation to excite the shunt field winding of the main motor without necessity of additional DC power supply for field winding excitation; the auxiliary generator including shunt field winding of the main motor can be adjusted with regard to exciting current or setting with the value of exciting current or the excitation being positively increased in response to the speed, comprising:
the armature rotor A101 of DC main motor including internal rotation or external rotation type, consisted of a commutator, armature winding and shaft; the shaft is provided for mechanically rotary output and driving the coupling auxiliary exciting generator G101 for exciting the shunt field winding of the main motor;
the field of DC generator including series field winding S101 series with brush and armature and shunt field winding F101 being excited by auxiliary generator;
related mechanical structure such as the end casing, bearing, machine base, iron core, coupler, etc., to the above DC motor;
auxiliary generator G101 comprising AC or DC generator and coupling with the armature rotor of above DC main motor being driven by the auxiliary generator G101, and it is controlled through the control device C101; the auxiliary generator including an DC generator or AC generator through commutation to control the exciting current of shunt field winding to appear positive increment of excitation in response to the speed or adjustable and setting its exciting current.

2. The DC compound motor driving auxiliary generator with its main motor as power supply for the shunt field winding excitation according to claim 1, may form the following different functions against DC motor subject to the variety of auxiliary generator and means of control:
(1) The auxiliary generator is changed to the type of constant current output when exceeding a defined RPM, such as saturated series generator or differential compound generator, which may appear constant current exciting against the shunt field winding when exceeding a defined speed, in order to appear assisted compound or differential compound excitation against the series winding, and the characteristics of constant current may come from the generator itself, such as the characteristics of differential compound series generator or the control by the control device; the auxiliary generator may comprise DC generator or AC generator through commutation.
(2) The characteristics as above (1) is further related to the control, adjustment and setting for the value of exciting constant current of shunt field.
(3) The exciting current produced from auxiliary generator being positively increased in response to the speed is provided for series winding to produce assisted compound or differential compound excitation.
(4) The characteristics as above (3) can be further provided for adjusting the amount of exciting current.

3. The DC compound motor driving auxiliary generator with its main motor as power supply for the shunt field winding excitation according to claim 1, the polar relation of shunt field winding to series winding may include appearing assisted compound or differential compound, and wiring connection may include long compound or short compound

4. The DC compound motor driving auxiliary generator with its main motor as power supply for the shunt field winding excitation according to claim 1, an auxiliary exciting battery B101 can be added to provide excitation against the shunt field F101 during the stage of start or the main motor running at low speed, and further a choke diode CR101 can be series between auxiliary battery B101 and shunt field winding F101 and parallel connected to voltage regulator REG101 to limit charging current flowing back to auxiliary battery B101 from auxiliary generator G101 as the adjustment through the voltage regulator REG101.
